# EUROPEAN PATENT SPECIFICATION

(11) **EP 0 334 686 B1**
(45) Date of publication and mention of the grant of the patent: **14.12.1994**
(21) Application number: 89303066.8
(22) Date of filing: 28.03.1989
(51) Int. Cl.: B65G 15/42, B65G 15/64

(54) **Anti-weaving conveyor belt**
Anti-Wellen-Förderband
Bande transporteuse non flottante

(30) Priority: 24.03.1988 JP 38719/88; 27.07.1988 JP 99586/88
(43) Date of publication of application: 27.09.1989
(73) Proprietor: HONDA SANGYO CO., LTD., Yokohama-shi Kanagawa-ken (JP)
(72) Inventor: Hokao, Naomi c/o Honda Sangyo Co., Ltd., Yokohama-shi, Kanagawa-ken (JP)
(74) Representative: Leale, Robin George

(56) References cited:
- DE-A- 3 712 162
- DE-U- 8 613 942
- GB-A- 1 554 539
- PATENT ABSTRACTS OF JAPAN, vol. 7, no. 74 (M-203)[1219], 26th March 1983; & JP-A-58 002 104 (NIHON POLYMER K.K.) 07-01-1983

## Description

This invention relates to an anti-weaving conveyor belt, and more particularly to such a conveyor belt having at least one longitudinal guide member fixed to the back of the belt body to prevent the belt from weaving, i.e. from moving along in a zigzag course.

As is well known, conveyor belts are frequently used in factories or warehouses for transporting things from one place to another. Also, they are used for delivering and placing things such as workpieces exactly at a required position. In this connection there is a strong requirement that the belt should not move along in a zigzag course, but rather that the belt should move in a straight line. Some such anti-weaving conveyor belts have been proposed and used. One example is a belt with perforations formed at regular intervals along its opposite longitudinal edges, which are sequentially caught by main or auxiliary rollers having suitable teeth to catch the perforations. No matter what material such a belt is made of, the said perforations can easily be made. However, the perforations are liable to be deformed or broken during operation, e.g. when the belt is subjected to strong vibration. Therefore, the linear movement of the conveyor belt cannot be assured for an extended period.

Another known anti-weaving conveyor belt has guide strips along its opposite longitudinal edges, and is used with main or auxiliary rollers having circumferntial grooves to receive such guide strips. The guide strips are fixed to the opposite longitudinal edges of the belt by adhesive. Therefore, the belt and the guide strips must be made of a material which is suitable for sticking with adhesive, such as rubber or polyurethane, which means that a material which has a good releasability or mold release characteristic cannot be used if it is not suitable for sticking with adhesive. Fluoroplastic belts and guide strips are made by impregnating heat resistant material molds with a fluoroplastic and then calcinating the same, and they are suitable for use in a high temperature environment. However, the fluoroplastic-impregnated guide strips cannot be fixed to the fluoroplastic-impregnated belt by means of adhesive. This makes it difficult to provide an anti-weaving conveyor belt which can be used in high temperature situations such as in an electric furnace.

The said guide strips are made by impregnating rubber or plastic molds with a fluoroplastic, and normally they will expand or contract evenly when subjected to external force. However, when such a guide strip is received in a groove of a roller at the turning end of a conveyor, the part of the guide strip which is nearer to the bottom of the groove will be curved more than the part of the strip which is remote from the bottom of the groove, and as a result the rubber or plastic strip will be distorted in the groove to such an extent that the belt cannot move smoothly.

JP-A-58002104 discloses an anti-weaving conveyor belt comprising a belt body which is composed of a heat-resistant, fluoroplastic-impregnated sheet, and an elongate guide member fixed to the back of the belt body and extending longitudinally thereof, the said guide member comprising heat-resistant, fluoroplastic-impregnated fibers.

According to the present invention there is provided an anti-weaving conveyor belt comprising a belt body which is composed of a heat-resistant, fluoroplastic-impregnated and calcinated sheet, and at least one elongate guide member fixed to the belt body and extending longitudinally thereof, wherein the or each said guide member comprises a number of cords twisted together, each cord comprising a number of heat-resistant, fluoroplastic-impregnated and calcinated fibers twisted together, the said guide member being joined to the back of the said belt body by stitches of heat-resistant, fluoroplastic-impregnated and calcinated strands.

The or each said guide member preferably has a round or square profile and is preferably joined to the belt body by being hot-pressed and welded so as to be temporarily held to the back of the belt body, and then joined to the belt body by said stitches.

In one form of the invention the said belt body comprises an upper band and two lower reinforcing strips attached by a heating process to the back of the upper band along the opposite longitudinal edges of the latter, a said guide member being joined to each of said lower strips by said stitches, whereby the stitches are concealed below said upper band. The lower strips may be formed by the longitudinal edges of the said upper band which are folded on to the back of the upper band.

In another form of the invention the said belt body comprises a lower band and two upper reinforcing strips attached by a heating process to the upper surface of the lower band along its opposite longitudinal edges, a said guide member being joined to each edge region of the lower band by said stitches, whereby the stitches are concealed below the upper strips. The upper strips may be formed by the longitudinal edges of the lower band which are folded onto the upper surface of the lower band.

Thus an anti-weaving conveyor belt according to the present invention uses parts and stitching strands which are all made of a heat-resistant material impregnated with a fluoroplastic, and therefore it can be used in a high-temperature environment. The belt sheet and the guide members are thus made of a material which has a good releasability or mold release characteristic, and they are joined by stitching, thus reliably preventing separation.

As already mentioned, the or each guide member is composed of a number of cords twisted together, preferably to form a round or square profile, each of which cords comprises a number of heat-resistant, fluoroplastic-impregnated fibers twisted together. When such a guide member is received in a groove of an end roller and bends around the circumference of the roller, the guide member is quite free of uneven stress which would otherwise tend to twist the guide member when the belt is turning around an end roller, thereby preventing smooth running of the belt. This lack of stress results from the fact that each cord weaves inward and outward over the whole length of the guide member, and therefore one part of the cord comes close to the bottom of the groove in the roller while another part is remote from the bottom of the groove. The stress brought about in the part of the cord which is close to the groove bottom is greater than the stress in the part of the cord which is remote from the groove bottom. However, as a result of the twisting together of the cords, each and every cord has the same resultant stress and the guide member is therefore evenly stressed when it is bent around the circumference of the roller. Thus, the guide member is free of local stress or distortion, and the smooth running of the belt is assured.

Some embodiments of the invention will now be described by way of example and with reference to the accompanying drawings, in which:-
Figs 1 to 5 show an anti-weaving conveyor belt according to a first embodiment of the present invention, wherein:
Fig. 1 is a perspective view of a belt body and a guide member, which latter is shown separated from the belt body;
Fig. 2A is an end view of the guide member;
Fig. 2B is an enlarged side view of part of the guide member, showing the twisted form of its cords in an exaggerated manner;
Fig. 3 is a perspective view of the anti-weaving conveyor belt, with two guide members fixed to its back;
Fig. 4 is a back view of the anti-weaving conveyor belt; and
Fig. 5 shows how the conveyor belt is guided at each roll end.
Figs. 6 to 8 show an anti-weaving conveyor belt according to a second embodiment of the present invention, wherein;

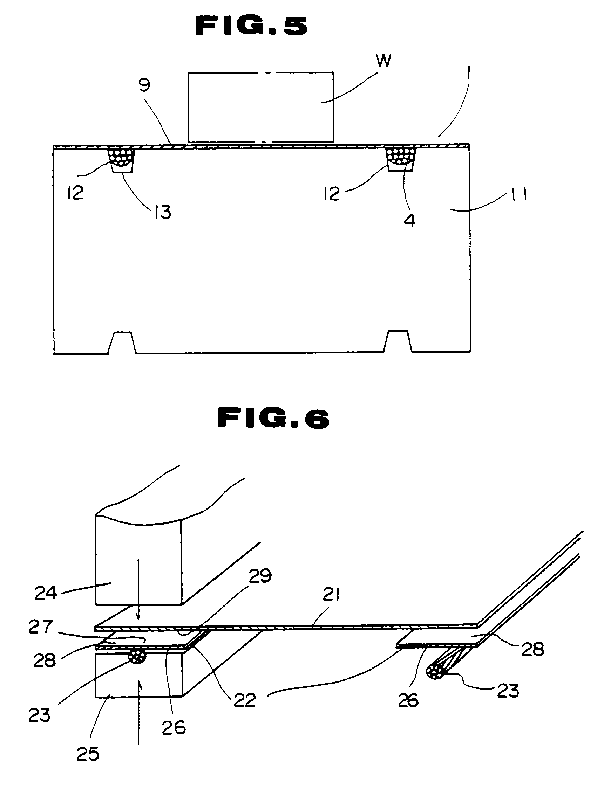

Fig. 6 is a view showing how the anti-weaving conveyor belt of this embodiment is manufactured;

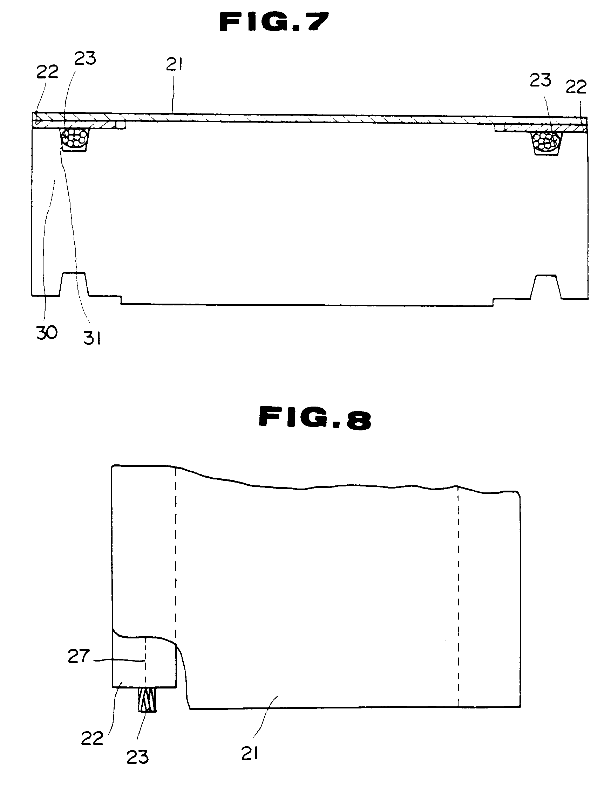

Fig. 7 shows the anti-weaving conveyor belt with its guide members fitting in grooves of a roller; and

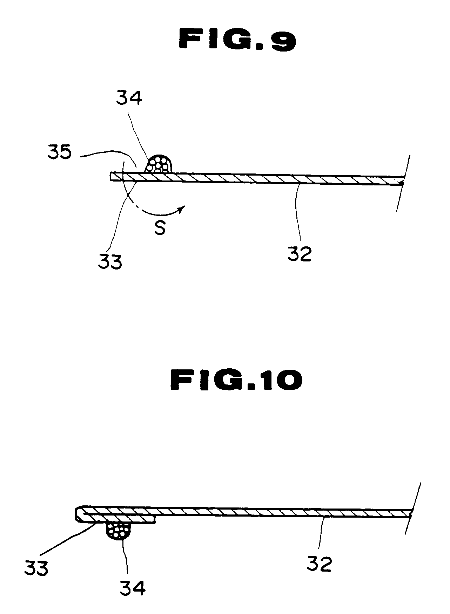

Fig. 8 is a plan view of the anti-weaving conveyor belt, partly broken away.
Figs. 9 and 10 show an anti-weaving conveyor belt according to a third embodiment of the present invention, wherein:
Fig. 9 shows the belt body prior to folding its opposite edges onto its back; and
Fig. 10 shows the belt body with its opposite edged folded and hot welded on its back.

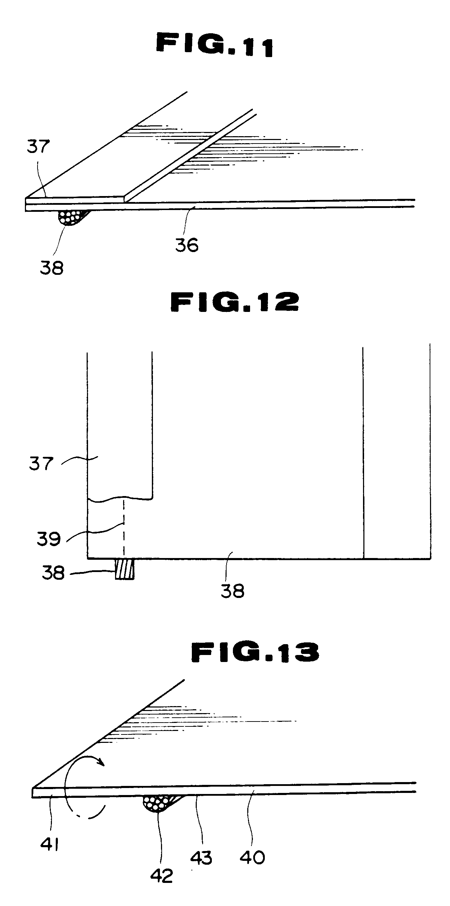

Figs. 11 and 12 show an anti-weaving conveyor belt according to a fourth embodiment of the present invention, wherein;
Fig. 11 is a perspective view of the anti-weaving conveyor belt; and
Fig. 12 is a plan view of the anti-weaving conveyor belt, partly broken away.

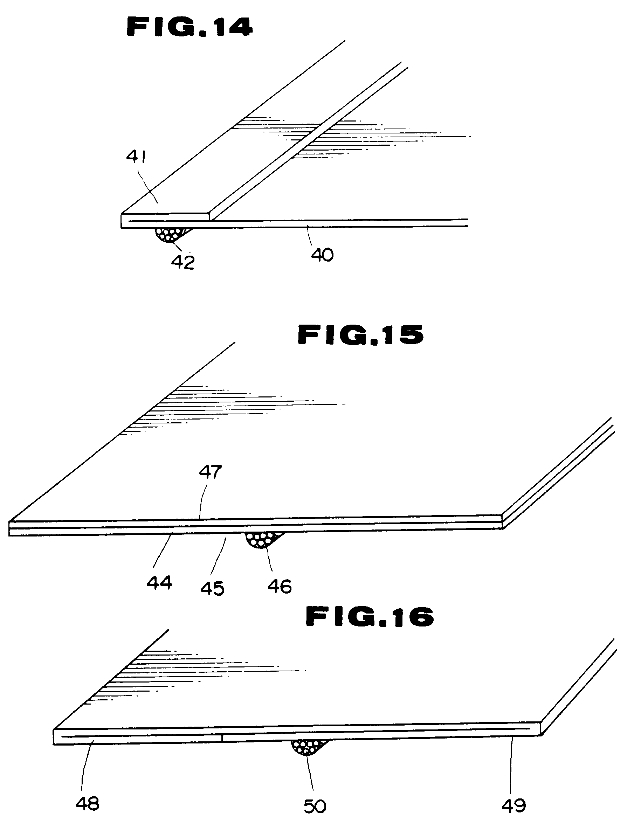

Figs. 13 and 14 show an anti-weaving conveyor belt according to a fifth embodiment of the present invention, wherein;
Fig. 13 is a perspective view of the anti-weaving conveyor belt showing the belt body prior to folding its opposite edges onto its upper surface; and
Fig. 14 shows the belt body with its opposite edged folded and hot-welded on its upper surface.
Finally, Figs. 15 and 16 show different modifications.

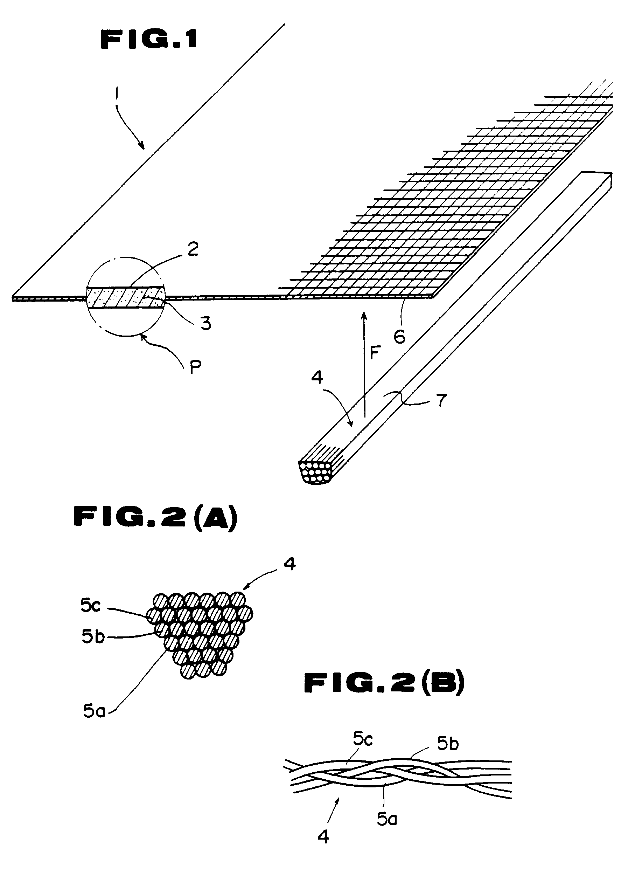

Figs. 1, 2A, 2B, 3, 4 and 5 show an anti-weaving conveyor belt according to a first embodiemnt of the present invention, comprising a belt body 1 in the form of a heat-resistant sheet 2 impregnated with a fluoroplastic material 3, as indicated by arrow P and shown at an enlarged scale, and a guide member 4 which is to be fixed to the belt body 1 to extend in its longitudinal direction. Examples of fibers which can be used in the heat-resistant sheet material are glass fiber, aramid fiber, and the like, and examples of the fluoroplastic material are polytetrafluoroethylene (PTFE), polychlorotrifluoroethylene (PCTFE), and the like.

The elongate guide member 4 is made of the same material as the belt body 1. More particularly it is composed of a number of cords twisted together to form a round or square profile, each cord 5a, 5b, 5c... comprising a number of heat-resistant fibers impregnated with a fluoroplastic material and twisted together. Fig. 2B shows only 3 cords for the sake of simplification in the drawing, but the guide member is in fact composed of many cords, as shown in the end view of Fig. 2A.

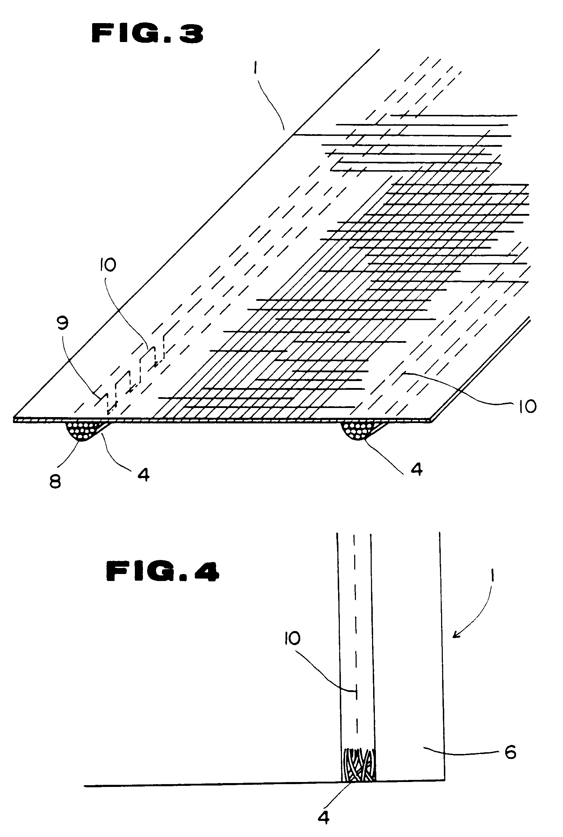

As indicated by arrow F in Fig 1, one such guide member is applied and hot-welded to each longitudinal edge of the back 6 of the belt body 1. Thus, first the upper surface 7 of the guide member 2 is partially attached to the back 6 of the belt body 1. As a matter of course, the guide members 4 extend straight in the longitudinal direction on the back of the belt body. Finally, the guide members 4 are sewn to the belt body 1 by stitches of heat resistant, fluoroplastic-impregnated strands 10, as shown in Fig. 3. The stitches appear on the upper surface 9 of the belt body. Fig 4 shows the back of the belt, with the guide members sewn to its opposite edges. Fig. 5 shows the belt conveyor with its opposite guide members 4 fitting in tapered grooves 12 of an end roller 11 of a conveyor. As shown in the drawing, the opposite sides of each guide member are close to the inside walls of the groove 12, but the under surface of the guide member 4 is spaced from the bottom 13 of the groove. An object to be transported is indicated at W.

As described above, the belt body 1 is made of a heat-resistant sheet 2 impregnated with a fluoroplastic material 3, and its guide members are made of the same material, specifically a number of stranded cords 5a, 5b, 5c.... of the heat-resistant, fluoroplastic-impregnated material. Also, the strands with which the guide members are sewn to the belt body are made of the same heat-resistant, fluoroplastic-impregnated material. As a result the whole assembly cn be used in a high-temperature environment, such as a calcinating furnace, an electric furnace, or the like. The fluoroplastic has good mold release characteristics, but it has poor bond properties. For this reason, instead of using an adhesive, the belt body and the guide members are joined by sewing them together by means of stitches, so as to guarantee no separation of the guide members from the belt body. The guide members are sewn to the belt body by stitching the strands 10 vertically through the guide members, that is traversing between the bottom of the guide member and the upper surface of the belt, so that the strands 10 do not appear at the sides of the guide member, thus causing no adverse effect on the smooth movement of the guide member along the opposite side walls of a groove of a roller.

The use of stranded cords has the effect of reducing local stressing of the guide members to a minimum and also assures the guide members of even distribution of stress.

In use, a part of every cord comes close to the bottom of the groove in a roller, and another part is spaced from the bottom of such groove. The former or inside part of the cord is curved more and stressed more than the latter or outside part. Every cord, however, experiences substantially the same resultant stress, and therefore the guide member composed of a number of cords twisted together will be free from local stress or distortion which would have an adverse effect on the passing of the stranded cords through the groove of a roller.

Figs 6, 7 and 8 show another embodiment of the invention. In this embodiment an anti-weaving conveyor belt is shown as comprising a belt body 21 which is again made of a heat-resistant sheet impregnated with a fluoroplastic, and guide members 23 which consist of a number of cords twisted together to form a round profile, each cord comprising a number of heat-resistant, fluoroplastic-impregnated fibers twisted together. Also, metal heating pads 24, 25 are shown.

Glass fiber and aramid resin can be used as a heat-resistant sheet material, and examples of a suitable fluoroplastic are polytetrafluoroethylene (PTFE), polychlorotrifluoroethylene (PCTFE), and the like.

In this embodiment the opposite longitudinal edes of the belt body 21 are provided with reinforcing strips 22. But first a guide member 23 is hot-welded and temporarily fixed to the back of each strip 22, and then the guide member is sewn to the back of the strip 22 by stitches 27 of heat-resistant, fluoroplastic-impregnated strands. The stitches 27 appear on the upper surface 28 of the strip 22. Finally, the surfaces 28 of the reinforcing strips 22 are hot-welded to the back 29 of the belt body 21 by operation of the metal heating pads 24 and 25. Thus the guide members 23 are integrally connected to the beld body 21, which is made of a material of good releasability. No stitches 27 appear on the surface of the belt, so there is no danger of stitches catching on things being transported by the belt. The stitches cannot be loosened, either. The double-layer construction along each longitudinal edge of the belt has the effect of increasing its strength.

Another embodiment of the invention is shown in Figs. 9 and 10. In this embodiment the anti-weaving conveyor belt comprises a belt body 32 having longitudinal edge portions 33 folded on to the back of the belt body, and guide members 34 fixed to the longitudinal edge portions of the belt in the same way as described above. As indicated by arrow S, the longitudinal edge portions of the belt are folded on to the back of the belt.

Still another embodiment of the invention is shown in Figs. 11 and 12. Here the anti-weaving conveyor belt comprises a belt body 36, reinforcing strips 37, and guide members 38. In this case again no stitches 39 appear on the surface, being covered by the strips 37.

A still further embodiment of the invention is shown in Figs. 13 and 14. Here the anti-weaving conveyor belt comprises a belt body 40, folded edges 41 and guide members 42. The guide members 42 are sewn to the back 43 of the belt 40 by stitches as before, and then the longitudinal edges 41 are folded on to the upper surface of the belt 40 to cover the stitches.

As shown in Fig. 15, a single guide member 46 may be sewn to the back 45 of an underlying belt sheet, while an overlying belt sheet which is as wide as the underlying belt sheet is hot-melted and integrally connected to the underlying belt sheet.

As shown in Fig. 16, a sheet twice as wide as the belt body may be folded on itself after sewing a single guide member 50 to one half of the sheet, and then the folded sheet halves are hot-melted and integrated.

## Claims

1. An anti-weaving conveyor belt comprising a belt body (1) which is composed of a heat-resistant, fluoroplastic-impregnated and calcinated sheet, and at least one elongate guide member (4) fixed to the belt body and extending longitudinally thereof, wherein the or each said guide member comprises a number of cords (5a etc.) twisted together, each cord comprising a number of heat-resistant, fluoroplastic-impregnated and calcinated fibers twisted together, the said guide member being joined to the back of the said belt body by stitches (10) of heat-resistant, fluoroplastic-impregnated and calcinated strands.

2. A conveyor belt as claimed in claim 1, wherein the or each said guide member (4) has a round or square profile.

3. A conveyor belt according to claim 1 or 2, wherein the or each said guide member (4) has been joined to the belt body (1) by being hot-pressed and welded so as to be temporarily held to the back of the belt body, and then joined to the belt body by said stitches (10).

4. A conveyor belt according to any of claims 1 to 3, wherein the said belt body comprises an upper band (21) and two lower reinforcing strips (22) attached by a heating process to the back of the upper band along the opposite longitudinal edges of the latter, a said guide member (23) being joined to each of said lower strips by said stitches (27), whereby the stitches are concealed below said upper band.

5. A conveyor belt according to claim 4, wherein said lower strips (33) are formed by the longitudinal edges of the said upper band (32) which are folded on to the back of the upper band.

6. A conveyor belt according to any of claims 1 to 3, wherein the said belt body comprises a lower band (36) and two upper reinforcing strips (37) attached by a heating process to the upper surface of the lower band along its opposite longitudinal edges, a said guide member (38) being joined to each edge region of said lower band by said stitches (39), whereby the stitches are concealed below said upper strips.

7. A conveyor belt according to claim 6, wherein said upper strips are formed by the longitudinal edges (41) of said lower band (4) which are folded on to the upper surface of the said lower band.

## Patentansprüche

1. Anti-Pendel-Förderband, umfassend: einen Bandkörper (1), der aus einem wärmefesten, Fluorkunststoff-imprägnierten und calcinierten Flachmaterial gebildet ist, und Wenigstens ein langgestrecktes Führungsteil (4), das an dem Bandkörper befestigt ist und sich in dessen Längsrichtung erstreckt, wobei das oder jedes der Führungsteile eine Anzahl von miteinander verdrehten Schnüren (5a usw.) aufweist, wobei jede Schnur eine Anzahl von wärmefesten, Fluorkunststoff-imprägnierten und calcinierten Fasern aufweist, die miteinander verdreht sind, wobei das Führungsteil mit der Rückseite des Bandkörpers durch Stiche (10) aus wärmefesten, Fluorkunststoffimprägnierten und calcinierten Fäden verbunden ist.

2. Förderband nach Anspruch 1, in dem das oder jedes Führungsteil (4) ein rundes oder rechteckiges Profil aufweist.

3. Förderband nach Anspruch 1 oder 2, in dem das oder jedes Führungsteil (4) mit dem Bandkörper durch Heißpressen und Schweißen derart verbunden wurde, daß es an der Rückseite des Bandkörpers vorübergehend gehalten, und dann mit dem Bandkörper durch die Stiche (10) verbunden wurde.

4. Förderband nach einem der Ansprüche 1 bis 3, in dem der Bandkörper ein oberes Band (21) und zwei untere Verstärkungsstreifen (22) aufweist, die durch einen Erwärmungsprozeß an der Rückseite des oberen Bands entlang dessen gegenüberliegenden Längsrändern angebracht sind, wobei mit jedem der unteren Streifen eines der Führungsteile (23) durch die Stiche (27) verbunden ist, wodurch die Stiche unter dem oberen Band verborgen sind.

5. Förderband nach Anspruch 4, in dem die unteren Streifen (33) durch die Längsränder des oberen Bands (32), die auf die Rückseite des oberen Bands gefaltet sind, gebildet sind.

6. Förderband nach einem der Ansprüche 1 bis 3, in dem der Bandkörper ein unteres Band (36) und zwei obere Verstärkungsstreifen (37) aufweist, die durch einen Erwärmungsprozeß an der oberen Fläche des unteren Bands entlang seiner gegenüberliegenden Längsränder angebracht sind, wobei mit jedem Randbereich des unteren Bands eines der Führungsteile (38) durch die Stiche (39) verbunden ist, wodurch die Stiche unter den oberen Streifen verborgen sind.

7. Förderband nach Anspruch 6, in dem die oberen Streifen durch die Längsränder (41) des unteren Bands (4), die auf die obere Fläche des unteren Bands gefaltet sind, gebildet sind.

## Revendications

1. Courroie de convoyeur sans flottement comprenant un corps de courroie (1) qui est composé d'une feuille résistant à la chaleur, calcinée et imprégnée de plastique fluoré, et au moins un organe (4) allongé de guidage fixé au corps de courroie et s'étendant longitudinalement par rapport à celui-ci, dans laquelle le ou chaque organe de guidage comporte un certain nombre de cordons (5a etc...) torsadés ensemble, chaque cordon comprenant un certain nombre de fibres résistant à la chaleur, calcinées et imprégnées de plastique fluoré torsadées ensemble, ledit organe de guidage étant lié au dos dudit corps de courroie par des points de couture (10) de fils résistant à la chaleur, calcinés et imprégnés de plastique fluoré.

2. Courroie de convoyeur selon la revendication 1, dans laquelle le ou chaque organe de guidage (4) a un profil rond ou carré.

3. Courroie de convoyeur selon la revendication 1 ou 2 dans laquelle le ou chaque organe de guidage (4) a été relié au corps de courroie (1) en ayant été pressé à chaud ou soudé afin d'être maintenu temporairement au dos du corps de courroie, et ensuite lié au corps de courroie par lesdits points de couture (10).

4. Courroie de convoyeur selon l'une quelconque des revendications 1 à 3, dans laquelle ledit corps de courroie comporte une bande supérieure (21) et deux rubans (22) inférieurs de renfort attachés par un procédé à chaud au dos de la bande supérieure le long des bords longitudinaux opposés de cette dernière, un organe de guidage (23) étant lié à chacun desdits rubans inférieurs par lesdits points de couture (27), lesdits points de couture étant dissimulés au-dessous de ladite bande supérieure.

5. Courroie de convoyeur selon la revendication 4, dans laquelle lesdits rubans inférieurs (33) sont formés par les bords longitudinaux de ladite bande supérieure (32) qui sont repliés sur le dos de la bande supérieure.

6. Courroie de convoyeur selon l'une quelconque des revendications 1 à 3, dans laquelle ledit corps de courroie comprend une bande inférieure (36) et deux rubans supérieurs de renfort (37) attachés par un procédé à chaud à la surface supérieure de la bande inférieure le long de ces bords longitudinaux opposés, un organe de guidage (38) étant lié à chaque région de bord de ladite bande inférieure par lesdits points de couture (39), les points de couture étant dissimulés au-dessous desdits rubans supérieurs.

7. Courroie de convoyeur selon la revendication 6, dans laquelle lesdits rubans supérieurs sont formés par les bords longitudinaux (41) de ladite bande inférieure (4) qui sont repliés sur la surface supérieure de ladite bande inférieure.
